Europäisches Patentamt

European Patent Office

Office européen des brevets

(19)

(11) Numéro de publication : **0 010 486**
**B1**

(12) **FASCICULE DE BREVET EUROPÉEN**

(45) Date de publication du fascicule du brevet :
**15.08.84**

(51) Int. Cl.³ : **A 01 K 11/00**, G 09 F 3/00

(21) Numéro de dépôt : **79400733.6**

(22) Date de dépôt : **11.10.79**

(54) **Etiquette d'identification pour oreilles d'animaux.**

(30) Priorité : **12.10.78 FR 7829111**

(43) Date de publication de la demande :
**30.04.80 Bulletin 80/09**

(45) Mention de la délivrance du brevet :
**15.08.84 Bulletin 84/33**

(84) Etats contractants désignés :
**BE CH DE GB IT LU NL**

(56) Documents cités :
**DE-A- 1 786 534**
**DE-A- 1 804 516**
**FR-A- 2 258 787**
**FR-A- 2 344 919**
**GB-A- 979 499**
**US-A- 3 788 276**

(73) Titulaire : **SOCIETE NOUVELLE ROCKALL FRANCE S.A.**
**Route de Beauvais**
**F-35500 Vitré (FR)**

(72) Inventeur : **Porcher, Alain**
**2, Bld. Châteaubriand**
**F-35500 Vitré (FR)**

(74) Mandataire : **Moncheny, Michel et al**
**c/o Cabinet Lavoix 2 Place d'Estienne d'Orves**
**F-75441 Paris Cedex 09 (FR)**

Jouve, 18, rue St-Denis, 75001 Paris, France

## Description

La présente invention concerne l'identification d'animaux au moyen d'étiquettes attachées de façon inviolables à l'oreille de ceux-ci et munies de moyens d'identification directement intelligibles. Plus spécifiquement, l'invention concerne l'identification d'animaux d'élevage consistant à attacher une plaquette portant une information relative au propriétaire ou à l'éleveur de cet animal.

On sait que l'élevage des animaux de boucherie est régi par une réglementation sévère s'appliquant pendant toute la vie de l'animal et il importe donc de pouvoir identifier celui-ci sans risque d'erreur ou de fraude.

Actuellement, le procédé le plus largement répandu consiste à attacher par perforation à l'oreille de l'animal, une petite plaquette appelée aussi « bouton d'oreille » qui porte un numéro ou autre ensemble d'identification directement intelligible aussi bien par les Services vétérinaires officiels que par les personnes intervenant durant la vie de l'animal, telles que l'éleveur, le personnel d'un abattoir ou autres. Un tel système d'identification peut entraîner des risques d'erreur et des personnes mal intentionnées peuvent éventuellement modifier les informations d'identification ainsi apposées sur l'étiquette.

Afin d'éviter les risques de fraudes, il est également connu d'apposer sur l'étiquette un second code inintelligible directement et ne pouvant être lu que par les services autorisés. Une telle étiquette est décrite dans le US-A 3 788 276 et représentée aux Fig. 18, 20 et 26 de ce document.

Il s'est avéré en pratique que la lecture du code inintelligible devient rapidement impossible après une certaine durée d'utilisation de l'étiquette par suite des salissures inévitables qui s'y déposent. De plus, les fraudes restent possibles dans la mesure où un tel code peut être décodé par des personnes mal intentionnées.

L'invention a pour but de fournir une étiquette dépourvue de ces inconvénients. Elle a donc pour objet une étiquette d'identification pour oreilles d'animaux comportant une plaquette munie de moyens d'attache à l'animal à identifier, et présentant d'une part une zone sur laquelle est inscrite une information en clair directement intelligible, et d'autre part, au moins une piste de codage magnétique ou optique, cette étiquette étant caractérisée en ce qu'elle comprend un cache amovible recouvrant ladite piste de codage sur ses deux faces et des moyens de plombage reliant ledit cache à la plaquette pour permettre de signaler tout décachetage non autorisé de la piste de codage de l'étiquette.

L'invention sera mieux comprise à l'aide de la description qui va suivre, donnée uniquement à titre d'exemple et faite en se référant aux dessins annexés, sur lesquels :

la Figure 1 est une vue éclatée en perspective d'une étiquette ou d'un bouton d'oreille pour l'identification d'animaux suivant l'invention ;

la Figure 2 montre en perspective un tel bouton d'oreille assemblé ;

la Figure 3 est une vue en perspective d'un bouton d'oreille réalisé selon une variante de l'invention ;

la Figure 4 est une vue en perspective d'un cache destiné à protéger la partie de codage d'un bouton d'oreille ;

la Figure 5 est une vue en coupe d'un bouton d'oreille et de son cache, réalisés selon une variante ;

la Figure 6 montre une vue en coupe partielle d'une autre variante de bouton d'oreille dans lequel les moyens de protection sont venus de matière avec le corps de ce bouton ; et

la Figure 7 est une vue en coupe du bouton d'oreille de la Fig. 6, les moyens de protection étant rabattus sur la partie de codage de ce bouton.

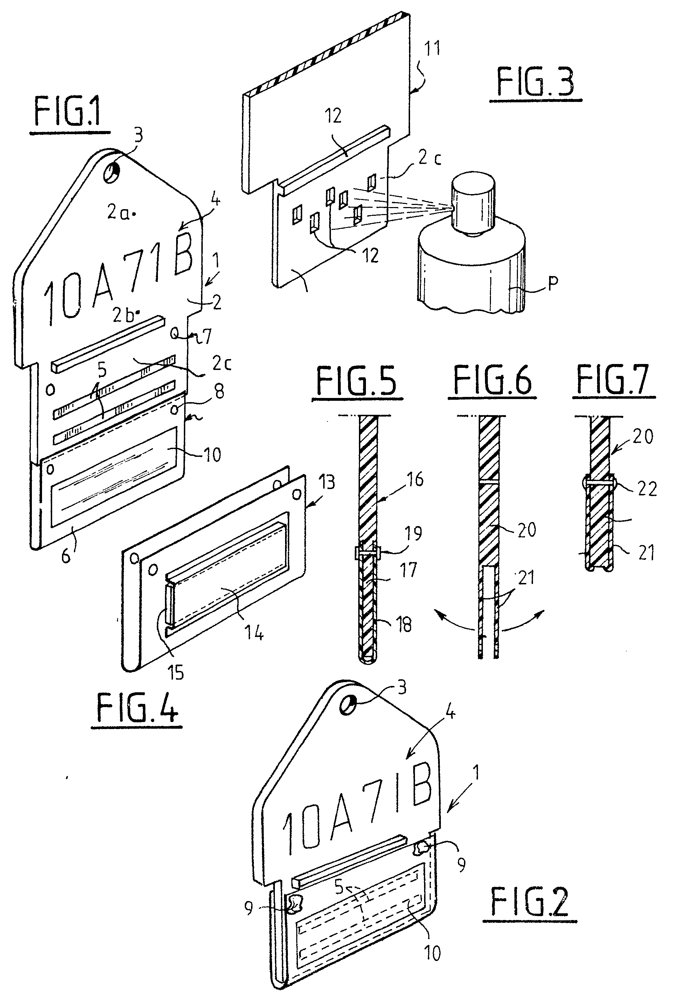

L'étiquette 1 représentée sur les Fig. 1 et 2 est destinée à l'identification d'animaux d'élevage, cas auquel on la désigne plus généralement sous l'appellation « bouton d'oreille ».

On voit que le bouton d'oreille 1 comporte une plaquette 2, réalisée de préférence en matière plastique, et divisée essentiellement en trois portions 2a, 2b et 2c. La première 2a de ces portions comporte un perçage 3 qui est destiné à recevoir un moyen d'attache, tel qu'un rivet, une cordelette ou autre moyen d'attache analogue assurant la fixation du bouton sur l'oreille d'un animal, par exemple. De préférence, on utilise, en tant que moyen d'attache, un rivet inviolable, c'est-à-dire que le bouton ne peut être détaché de l'oreille de l'animal que par la destruction de la plaquette 2.

La portion 2b intermédiaire est destinée à recevoir une information 4 identifiant l'animal auquel la plaquette 2 est attachée. On voit que cette information est intelligible et est constituée dans l'exemple par des chiffres et des lettres identifiant l'éleveur de l'animal en question.

La plaquette 2 comporte également une troisième portion 2c à laquelle est associée une seconde information qui est codée. Dans le cas représenté, cette information est matérialisée par deux pistes de codage magnétique 5 qui s'étendent en travers de la plaquette 2 parallèlement l'une à l'autre.

Le bouton d'oreille 1 comporte également un cache de protection 6 formé par une feuille repliée, réalisée par exemple en matière plastique et destinée à recouvrir des deux côtés la portion de codage 2c de la plaquette. De préférence, celle-ci comporte deux trous 7 espacés l'un de l'autre et coïncidant avec des trous 8 prévus dans les angles du cache 6 afin d'assurer, au moyen d'éléments de fixation tels que des plombs 9 par exemple (Fig. 2), la fixation du cache à la plaquette 2. Les plombs sont destinés à éliminer toute possibilité de démontage non autorisé ou de fraude par modification du code inscrit sur la plaquette 2. Le cache 6 a donc un double rôle à savoir d'une part protéger contre l'encrassement les pistes 5 et d'autre part, éliminer les risques de fraudes.

Les deux pistes 5 en un matériau magnétique peuvent être aimantées par enregistrement magnétique de l'information codée. Par ailleurs, on voit que le cache 6 comporte une pochette 10 dans laquelle peuvent être insérés des supports d'identification tels que des cartes, feuilles de papier et autres munis d'informations plus élaborées relatives à l'animal ou à l'objet identifié. La pochette 10 peut être réalisée en une matière transparente pour que le support d'information qui y est inséré puisse être observé directement.

La Fig. 3 représente une variante de l'invention comportant une étiquette 11 munie de plusieurs pistes de perforation 12 dont l'emplacement sur une zone codée 2c représente l'information portée par cette étiquette. Une butée d'introduction 12 est en saillie de la surface de l'étiquette. Par ailleurs, on a représenté sur la Fig. 3, un pulvérisateur P d'un produit de protection à l'aide duquel il est possible de revêtir la zone codée 2c de l'étiquette, le revêtement en résultant évitant lorsque le cache est enlevé un encrassement des perforations prévues dans cette zone. Le produit de protection peut être une matière plastique appropriée ou autre.

La Fig. 4 montre une autre variante d'un cache 13 pouvant être utilisé avec les étiquettes suivant l'invention. Dans ce cas, le cache porte une pochette 14 d'un volume tel qu'un objet 15 puisse y être inséré. Il peut s'agir par exemple d'un émetteur à haute fréquence ou autre destiné à transmettre des informations relatives au comportement de l'animal à un poste de réception éloigné, par exemple.

La Fig. 5 montre une autre variante d'étiquette formée par une plaquette 16 dont la zone de codage 17 présente une épaisseur plus faible que le reste de la plaquette, cette différence d'épaisseur permettant d'associer cette étiquette à un cache 18 qui n'est pas en saillie de la surface de celle-ci (comme dans les variantes précédemment décrites) mais qui affleure les faces de la plaquette. Des rivets 19 ou autres organes de fixation analogues rendent ce cache 18 solidaires de la plaquette, mais amovible.

Les Fig. 6 et 7 montrent encore une autre variante d'étiquette dont la plaquette 20 comporte deux lèvres 21 venues de matière et prolongeant les deux faces de la plaquette. Ces lèvres 21 sont destinées après repliage autour de leur zone de liaison avec la plaquette elle-même à venir s'appliquer contre celle-ci de façon à former un cache. Ici également, des rivets 22 ou autres organes de fixation analogues permettent de maintenir les lèvres 21 dans leur position de protection.

## Revendications

1. Etiquette d'identification pour oreilles d'animaux comportant une plaquette (1 ; 11 ; 16 ; 20) munie de moyens d'attache (3) à l'animal à identifier, et présentant d'une part une zone (2b) sur laquelle est inscrite une information en clair (4) directement intelligible, et d'autre part au moins une piste de codage (5) magnétique ou optique, cette étiquette étant caractérisée en ce qu'elle comprend un cache amovible (6 ; 18 ; 21) recouvrant ladite piste de codage et des moyens de plombage (9 ; 12 ; 22) reliant ledit cache (6 ; 18 ; 21) à la plaquette pour permettre de signaler tout décachetage non autorisé de la piste de codage de l'étiquette.

2. Etiquette suivant la revendication 1, caractérisée en ce que lesdits moyens de plombage comprennent au moins un plomb (9).

3. Etiquette suivant la revendication 1, caractérisée en ce que lesdits moyens de plombage comportent au moins un rivet (19 ; 22).

4. Etiquette suivant la revendication 1, caractérisée en ce que ledit cache est constitué par deux lèvres (21) espacées de l'épaisseur de l'étiquette et venues de matière avec elle en s'étendant à partir de l'un de ses bords correspondant à la zone dans laquelle contre cette piste et étant fixées à l'étiquette au moyen desdits moyens de plombage (22).

5. Etiquette suivant l'une quelconque des revendications 1 à 4, caractérisée en ce qu'une pochette (14) est fixée sur ledit cache (13), cette pochette étant destinée à contenir un dispositif de transmission d'informations relatives au comportement de l'animal à un poste de réception éloigné.

6. Etiquette suivant l'une quelconque des revendications 1 à 4, caractérisée en ce que la zone (17) desdites pistes de codage présente une épaisseur inférieure à celle de ladite étiquette et en ce que ledit cache (18) recouvre ladite piste (17) de manière à être à fleur du reste de l'étiquette.

## Claims

1. An identification label for ears of animals, comprising a plate (1 ; 11 ; 16 ; 20) provided with means (3) for attaching the plate to the animal to be identified and having, on one hand, a zone (2b) in which is inscribed directly intelligible clear information (4) and, on the other hand, at least one magnetic or optical coding track (5), this label being characterised in that it comprises a detachable cover (6 ; 18 ; 21) covering said coding track and sealing means (9 ; 12 ; 22) connecting said cover (6 ; 18 ; 21) to the plate so as to signal any unauthorised uncovering of the coding track of the label.

2. A label according to claim 1, characterised in that said sealing means comprise at least one seal (9).

3. A label according to claim 1, characterised in that said sealing means comprise at least one rivet (19 ; 22).

4. A label according to claim 1, characterised in that sais cover is constituted by two lip portions (21) spaced apart to the extent of the thickness of the label and in one piece with the label and extending from one of its edges corresponding to the zone in which the coding track is located, these lip portions being foldable against this track and being fixed to the label by said sealing means (22).

5. A label according to any one of the claims 1 to 4, characterised in that a pocket (14) is fixed to said cover (13), this pocket being intended to contain a device for transmitting items of information relating to the behaviour of the animal to a remote receiver station.

6. A label according to any one of the claims 1 to 4, characterised in that the zone (17) of said coding tracks has a thickness less than that of said label and said cover (18) covers said track (17) so as to be flush with the rest of the label.

## Ansprüche

1. Identifizierungsmarke für Tierohren mit einer Plakette (1 ; 11 ; 16 ; 20), die mit Mitteln (3) zum Befestigen am Ohr des zu identifizierenden Tieres versehen ist und einerseits einen Bereich (2b), in dem eine unverschlüsselte, direkt erfaßbare Information (4) eingeschrieben ist und andererseits mindestens einen magnetischen oder optischen Codierstreifen (5) aufweist, gekennzeichnet durch eine den Codierstreifen bedeckende abnehmbare Abdeckung (6 ; 18 ; 21) und Plombierungen (9 ; 12 ; 22), mit denen die Abdeckung (6 ; 18 ; 21) mit der Plakette verbunden ist, um jedes nicht erlaubte Entsiegeln des Codierstreifens der Marke anzeigen zu können.

2. Marke nach Anspruch 1, dadurch gekennzeichnet, daß die Plombierungen mindestens einen Plombierverschluß (9) aufweisen.

3. Marke nach Anspruch 1, dadurch gekennzeichnet, daß die Plombierungen mindestens eine Niete (19 ; 22) aufweisen.

4. Marke nach Anspruch 1, dadurch gekennzeichnet, daß die Abdeckung aus zwei mit der Dicke der Marke beabstandete Zungen (21) besteht, die mit dem Material der Marke verschmolzen sind und sich von einer, zu dem Bereich, in dem sich der Codierstreifen befindet gehörenden Kante aus erstrecken, gegen diesen Streifen umgeschlagen und mittels der Plombierungen (22) an der Marke befestigt sind.

5. Marke nach einem der Ansprüche 1 bis 4, dadurch gekennzeichnet, daß auf der Abdeckung (13) eine Tasche (14) befestigt ist, die einen Sender zum Übertragen von Information bezüglich des Verhaltens des Tieres an eine entfernte Empfangsstation enthält.

6. Marke nach einem der Ansprüche 1 bis 4, dadurch gekennzeichnet, daß der Codierstreifenbereich (17) dünner als die Marke ist und die Abdeckung (18) den Streifen (17) so bedeckt, daß sie bündig mit dem Rest der Marke abschließt.

FIG.1

FIG.3

FIG.5

FIG.6

FIG.7

FIG.4

FIG.2